# EUROPEAN PATENT APPLICATION

(11) **EP 2 086 181 A1**
(43) Date of publication of application: **05.08.2009**
(21) Application number: 07817303.6
(22) Date of filing: 22.11.2007
(51) Int. Cl.: H04L 12/56

(54) **SYATEM, METHOD, SERVICE CONTROL, AND TRIGGER DEVICE FOR CONTROLLING SERVICE INVOCATION**

(30) Priority: 22.11.2006 CN 200610157020; 17.04.2007 CN 200710100761; 12.06.2007 CN 200710112372
(71) Applicant: Huawei Technologies Co., Ltd., Shenzhen, Guangdong Province 518129 (CN)
(72) Inventor: WU, Sang, Shenzhen Guangdong 518129 (CN); SHI, Youzhu, Shenzhen Guangdong 518129 (CN)
(74) Representative: Gulde, Klaus W.
(86) International application number: PCT/CN2007/071113
(87) International publication number: WO 2008/061481

(57) **Abstract**

A system for controlling service invocations, applied in a circumstance of a multi-service server, is disclosed, including: a service triggering point, configured to detect a service triggering condition and send a communication event message to a first service control point when the service triggering condition is satisfied; and at least one first service control point, configured to acquire an invocable service indication from the communication event message sent by the service triggering point, and control the execution of the invocable services according to the indication. A method for controlling service invocations, a service control apparatus and a service triggering apparatus are also disclosed. Embodiments of the present invention ensure requirements on service priority under a circumstance of a multi-service server, and perform a unified triggering control process under a circumstance that the service triggering point connects to a service control point that needs a second trigger, so that triggering process efficiency is increased.

## Description

The present application claims priority to CN 200610157020.5, filed on November 22, 2006, CN 200710100761.4, filed on April 17, 2007, and CN 200710112372.3, filed on June 12, 2007, all of the three are entitled "SYSTEM AND METHOD FOR SERVICE INVOCAION CONTROL, AND SERVICE CONTROL POINT", and all of which are incorporated herein by references.

### FIELD OF THE INVENTION

The present invention relates to communication field, and more particularly, to a system and method for controlling service invocations, service control apparatus and service triggering apparatus.

### BACKGROUND

The IP Multimedia Subsystem (IMS) is introduced by 3GPP in version 5. The IMS is an architecture based on the Session Initial Protocol (SIP). The Session Layer and the Service Layer of an IMS are separated. A Serving Call Session Control Function (S-CSCF) of the Session Layer may invoke an IMS Application Server (AS) of the Service Layer through a pre-configured initial Filter Criteria (iFC).

The IMS service architecture, defined by 3GPP Technical Standard (3GPP TS) 23.218, includes three categories of application servers: a SIP application server, an Open Service Access (OSA) application server and an IMS Service Switching Function (IM-SSF). The SIP application server is configured to implement SIP-based value-added applications. The OSA application server is configured to implement third-party applications based on OSA application interface (API), and the OSA application server interacts with IMS core network through OSA Service Capability Server (SCS). The IM-SSF is configured to provide Customized Application for Mobile Network Enhanced Logic (CAMEL) service ability in an IMS domain. In an IMS network, services may be distributed and provided on a plurality of application servers, and a plurality of services may be provided on a same AS. In actual implementation, services belonging to a same category are generally provided on a same AS, for example, Telephone AS (TAS) is dedicated to provide services of Call Control category, OSA Service Capability Server (OSA SCS) AS is dedicated to provide services developed by OSA API.

As mentioned above, in an IMS network, services may be distributed and provided on a plurality of application servers, and a plurality of services may be provided on a same AS. The application servers are not aware of each other, and each AS will perform all of the services satisfying triggering conditions after receiving a communication message, and thus, the following problems may occur:

If a user subscribes to services s1, s2, s3, s4, s5, which are triggered when the user initiates an INVITE message. Services s1, s2 and s3 are provided on AS1, services s4 and s5 are provided on AS2. An actual service invocation priority should be: invoking s1 and s2 on AS1 first, then invoking s4 on AS2, and then invoking s3 on AS 1, and finally invoking s5 on AS2.

In the prior art, when receiving an INVITE message, AS1 will execute services s1, s2 and s3 at one time, the requirements on service priority mentioned above cannot be satisfied. Therefore, services trigger points shall indicate services that can be invoked by service control points, and service control points control the execution of services based on the indications.

Furthermore, in the existing IMS, IM-SSF and OSA SCS need to perform a second-trigger or delivery so that the communication message may be sent to Intelligent Service Control Point (SCP) or OSA application, that is, S-CSCF should trigger to IM-SSF or OSA SCS first, and then trigger to concrete applications through IM-SSF or OSA SCS. Triggering functions of IM-SSF, OSA SCS and triggering functions of S-CSCF, Service Brokers are overlapping. In order to increase the processing efficiency, a unified triggering control may be provided for all of the service triggering points below IM-SSF, while IM-SSF and OSA SCS only perform a signaling transfer processing.

### SUMMARY

The technical problem to be solved by embodiments of the present invention is to provide systems, methods, service control apparatuses, and service triggering apparatuses for controlling service invocations, so that requirements on invoking services according to service priority can be satisfied.

For addressing the above technical problems, embodiments of the present invention provide a method for controlling service invocations, being applicable in a multi-service server environment, and the method includes the following steps:
detecting, by a service triggering point, a service triggering condition, and sending a communication event message which carries an invocable service indication to a first service control point when the service triggering condition is satisfied.

Embodiments of the present invention also provide a method for controlling service invocations, being applicable in a multi-service server environment, and the method includes the following steps:
receiving a communication event message sent by a service triggering point;
acquiring an invocable service indication from the communication event message; and
controlling the execution of invocable services according to the indication.

Embodiments of the present invention also provide a service triggering apparatus, including:
a service triggering detecting unit, configured to detect a service triggering condition;
a service invocation message constructing unit, configured to construct a communication event message for service invocation when the service triggering condition is satisfied; and
a service invocation message delivering unit, configured to send the communication event message for service invocation to a first service control point through an E1 interface.

Embodiments of the present invention also provide a service control apparatus, including:
a service invocation message receiving unit, configured to receive a communication event message for service invocation sent by a service triggering point;
a service invocation matching unit, configured to acquire an invocable service indication from the communication event message received by the service invocation message receiving unit; and
a service processing control unit, configured to control the execution of invocable services according to the indication acquired by the service invocation matching unit.

Embodiments of the present invention further provide a system for controlling service invocations, being applied in a circumstance of a multi-service server, and the system includes:
a service triggering point, configured to detect a service triggering condition and send a communication event message to a first service control point when the service triggering condition is satisfied; and
at least one first service control point, configured to acquire an invocable service indication from the communication event message sent by the service triggering point, and control the execution of the invocable services according to the indication.

In embodiments of the present invention, a service triggering condition is detected by a service triggering point, and a communication event message which carries an invocable service indication is sent to a first service control point when the service triggering condition is satisfied, the first service control point acquires the invocable service indication from the communication event message and controls the execution of invocable services according to the indication. Therefore, embodiments of the present invention ensure requirements on service priority under a circumstance of a multi-service server, and perform a unified triggering control process under a circumstance that the service triggering point connects to a service control point that needs a second trigger, so that triggering process efficiency is increased. Embodiments of the present invention may also reduce signaling delay so as to attenuate network load, and may prohibit conflicts of service invocations when a service conflict occurs.

### BRIEF DESCRIPTION OF THE DRAWINGS

Fig 1 illustrates a schematic view showing an architecture of a system for controlling service invocations under a circumstance of a multi-service server according to an embodiment of the present invention.

Fig 2 illustrates a flowchart of a method for controlling service invocations under a multi-service server environment according to a first embodiment of the present invention.

Fig 3 illustrates a flowchart of a method for controlling service invocations under a multi-service server environment according to a second embodiment of the present invention.

### DETAILED DESCRIPTION

Embodiments of the present invention are described in detail in conjunction with accompanying drawings.

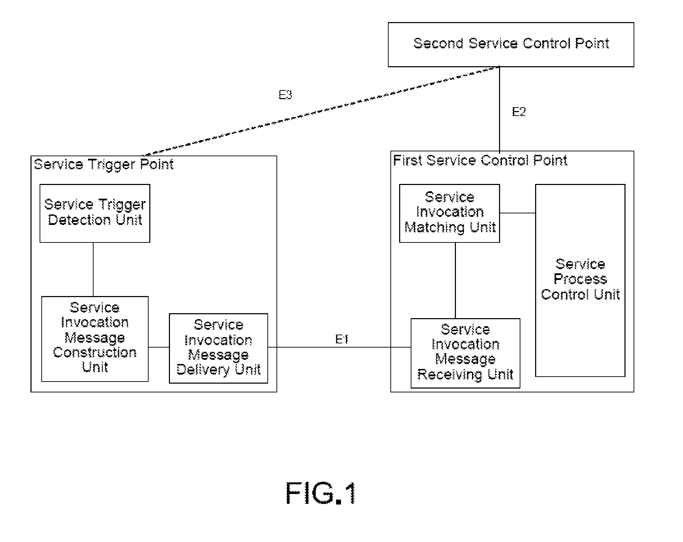

A network architecture according to an embodiment of the present invention is shown in Fig 1. The network includes a service triggering point, a first service control point, and a second service control point. The logical network elements are described as follows:

1. The service triggering point provides a service triggering condition detection function, and triggers communication to the first service control point when the triggering condition is satisfied. The service triggering point includes at least: S-CSCF, Service Broker (SB). The service triggering point may also include the following three unit modules internally:
a service triggering detecting unit, configured to detect a service triggering condition;
a service invocation message constructing unit, configured to construct a communication event message for service invocation when the service triggering condition is satisfied; and
a service invocation message delivering unit, configured to send the communication event message for service invocation to a first service control point through an E1 interface.

2. The first service control point is configured to acquire an invocable service indication from the communication event message sent by the service triggering point, and control the execution of the invocable services according to the indication. The first service point may provide a service procedure control function independently or perform the service procedure under the control of a second service control point. When the second service control point exists, the first service control point may also trigger the communication event to the second control point based on the service invocation condition. If the first service control point performs the service procedure under the control of the second service control point, for example, the first service control point is an IM-SSF, the first service control point converts a SIP message sent by the service triggering point to be an intelligent protocol message and sends the intelligent protocol message to the second service control point, such as an SCP. The first service control point includes at least: SIP AS, IM-SSF, and OSA CSC. A plurality of first service control points may exist in a network, and a plurality of services may be provided on one first service control point.

The first service control point may also include the following three unit modules internally:
a service invocation message receiving unit, configured to receive a communication event message for service invocation sent by the service triggering point through an E1 interface;
a service invocation matching unit, configured to acquire an invocable service indication from the communication event message received by the service invocation message receiving unit; and
a service processing control unit, configured to control the execution of the invocable services according to the indication acquired by the service invocation matching unit.

3. The second service control point is configured to control the first service control point to execute service procedure. When the second service control point exists, the first service control point needs to perform a signaling message conversion between the service triggering point and the second service control point. The second service control point includes at least: SCP and OSA applications. The second service control point is not indispensable in a network, for example, when only SIP AS is provided in the network, it is not necessary to provide the second service control point.

4. An E1 interface exists from the service triggering point to the first service control point, and the interface protocol includes at least: SIP, and internal interface protocol (for example, when the service triggering point is set together with the first service control point).

5. An E2 interface exists from the first service control point to the second service control point, and the interface protocol includes at least: Intelligent Network Application Part (INAP), Customized Application Part (CAP) of Mobile Network Enhanced Logic, Mobile Application Part (MAP) protocol, OSA Application Programmable Interface (API), and internal interface protocol (for example, when the service triggering point is set together with the first service control point).

6. Optionally, when the first service control point and the service triggering point are set together, an E3 interface is provided between the service triggering point and the second service control point. The interface protocol includes at least: Intelligent Network Application Part (INAP), Customized Application Part (CAP) of Mobile Network Enhanced Logic, Mobile Application Part (MAP) protocol, OSA Application Programmable Interface (API), and internal interface protocol (for example, when the first service control point, service triggering point, and second service control point are set together).

The technical solutions of embodiments of the present invention are described below.

A service triggering point detects a service triggering condition, and sends a communication event message which carries an invocable service indication to a first service control point when the service triggering condition is satisfied. The first service control point controls the execution of the invocable services according to the indication.

Wherein:

1. The invocable service indication may be acquired through at least one of the following service triggering criteria elements: server address configuration, service information transparent data and service identifier configuration. The service triggering point performs the service triggering criteria, such as Initial Filter Criteria (iFC) in an IMS network, acquires the invocable service indication and carries the indication in the communication event message. The invocable service indication indicates the first service control point of the invocable services, and the first service control point may control the execution of services based on the indication.

An invocable service indication represented by server address configuration may be configured in service triggering criteria data. The service triggering criteria data may involve only one server address configuration to indicate one or more than one invocable service information, or may involve a plurality of server address configuration to indicate more than one invocable service information.

Taking iFC as an example, an exemplary instance of description for server address configuration in service triggering criteria data may be:

```
       <ApplicationServer>
            <ServerName>sip:AS1.home1.net;service=s1,s3,s5</ServerName>
       </ApplicationServer>
     or:
       <ApplicationServer>
            <ServerName>sip:part1@AS1.home1.net</ServerName>
       </ApplicationServer>
     or,
       <ApplicationServer>
          <ServerName>sip:part1.AS1.home1.net</ServerName> </ApplicationServer>
     or,
       <ApplicationServer>
              <ServerName>sip:s1@AS1.home1.net,sip:s3@AS1.home1.net,
 sip:s5@AS1.home1.net</ServerName>
       </ApplicationServer>
```

An exemplary instance of description for a plurality of server address configuration may be:

```
       <ApplicationServer>
              <ServerName>sip:s1@AS1.home1.net</ServerName>
              <ServerName>sip:s3@AS1.home.net</ServerName>
              <ServerName>sip:s5@AS1.home1.net</ServerName>
       </ApplicationServer>
```

In the above exemplary instance, "ApplicationServer" represents application server information, "ServerName" represents the name of the server, contents between <ServerName> and </ServerName> are the server address configuration. The service triggering point puts the server address configuration into the Route header field of SIP message, that is, uses the SIP header field to carry the invocable service indication. In the above instance, the invocable service indication in the SIP message sent by the service triggering point is represented by address entries carried in Route header field of SIP message, including address entries of the first service control point.

An exemplary instance of Route header field in SIP message is shown as follows:

```
       Route: <sip:AS1.home1.net;service=s1,s3,s5;lr>
     or,
       Route: <sip:part1@AS1.home1.net;lr>
     or,
       Route: <sip:part1.AS1.home1.net;lr>
     or,
       Route: <sip:s1@AS1.home1.net;lr>, <sip:s3@AS1.home1.net;lr>,
   <sip: s5@AS1.home1.net;lr>
     or,
       Route: <sip:s1@AS1.home1.net;lr>
       Route: <sip:s3@AS1.home1.net;lr>
       Route: <sip:s5@AS1.home1.net;lr>
```

When the first service control point receives a SIP message, the first service control point performs services s1, s3 and s5 according to "s1", "s3" and "s5" in the SIP message; or, after being aware of that "part1" in the SIP message correspond to services s1, s3 and s5, the first service control point performs corresponding services.

It can be seen that, when the invocable service indication includes more than one service information, all of the concrete service information may be listed in one Route header field; or, all of the concrete service information may be listed in a plurality of Route header fields, each Route header filed carrying one service information.

Furthermore, when the invocable service indication includes more than one service information, the order of the service information presented in the server address configuration may be the order of priority that the first service control points performs these services, for example, performs services s1, s3 and s5 in order.

Additionally, if a plurality of server address configurations is configured in service triggering criteria data, the service triggering point may put these server address configurations into a plurality of Route header fields, with one server address configuration in one Route header field, or put them in one Router header field. The service triggering point sends a SIP message carrying these Route header fields to the first service control point. The first service control point receives the SIP message, processes the services corresponding to the server address configurations, and then sends back a SIP message to the service triggering point. At this time, if the first service control point would add itself into SIP signaling path, a Record-Route header field of the message may carry only one of the server address configuration, or may carry all of the server address configurations.

An invocable service indication represented by service information transparent data may be:

```
     Content-Type: application/serviceinfo+xml
     <?xml version="1.0" encoding="UTF-8"?>
        <serviceinfo xmlns="um:ietfparams:xml:ns:serviceinfo">
               <service>
                     <servicekey>s1</servicekey>
                     <priority>0</priority>
              </service>
       </serviceinfo>
```

Service information transparent data means that it is transparent to the service triggering point. When constructing the communication event message to be sent to the first service control point, the service triggering point copies the service information transparent data, such as service information transparent data in service triggering criteria data to a SIP message body, such as the message body of the above "serviceinfo", that is, carrying the invocable service indication through the SIP message body.

An invocable service indication represented by service identifier configuration may be configured in the service triggering criteria data. Taking iFC as an example, an exemplary instance may be:

```
        <ApplicationServer>
            <ServerName>sip:AS1.home1.net</ServerName>
            <ServiceIdentity>
                 <ServiceName>s1</ServiceName>
                 <ServiceName>s3</ServiceName>
                 <ServiceName>s5</ServiceName>
            </ServiceIdentity>
       </ApplicationServer>
```

In the above instance, <ServiceIdentity> is a newly extended label entry in iFC of the present invention, representing service identifier configuration. Three service identifiers "s1", "s3" and "s5", indicating invocable services, are provided in the entry. When constructing the communication event message to be sent to the first service control point, the service triggering point transmits the invocable service indication in the iFC through an information segment in the SIP message that represents service identifiers, for example, transmits the invocable service indication through the P-Asserted-Service header field.

It can be seen that, a communication event message is routed to a first service control point according to a sever address configuration. The first service control point performs a particular service according to an invocable service indication carried in the communication event message. Except for route address information, the server address configuration also includes invocable service information. For example, AS1.home1.net is a route address information, being used to route the communication event message to the first service control point; "s1", "s3", "s5" and "part 1" are invocable service information, being used to indicate the first service control point to perform a particular service. Or, the first service control point resolves service information transparent data and acquires invocable service information. For example, "servicekey" in the above instance corresponds to a value "s1", indicating to perform a particular service. Or, the first service control point resolves a service identifier information segment in the message and acquires invocable service information, then performs a particular service.

Furthermore, the service triggering point invokes a first service control point AS 1, and carries a first invocable service indication in the communication event message to be sent to AS1. After the service triggering point receives an invocation response returned by AS1, the service triggering point continues to perform matching of service triggering criteria data. If the matching is successful, a first service control point AS2 is acquired, and then the service triggering point carries a second invocable service indication in the communication event message to be sent to AS2. The following methods may be used to enable the AS2 to acquire the second invocable service indication from the invocable service indication in the received communication event message:

Method 1: The service triggering point deletes the first invocable service indication in the invocation response returned by AS1, that is, the invocable service indication added by the service triggering point and sent to AS2 only includes the second invocable service indication. For example, the service triggering point sends a SIP INVITE message to AS1, and the message carries a first invocable service indication "s1", "s3", "s5". AS1 accomplishes services process, returns the SIP INVITE message to the service triggering point, the message carrying the whole first invocable service indication or a part of the first invocable service indication ("a part of" means only contain a part of "s1", "s3", "s5"). Before sending the SIP INVITE to AS2, the service triggering point deletes the first invocable service indication in the message, so the SIP INVITE message received by AS2 does not contain the first invocable service indication.

Method 2: The service triggering point adds in order invocable service indications to the communication event message to be sent to the service control points. When receiving the communication event message, AS2 extracts the newly added invocable service indication in order as the second invocable service indication, for example, the last or the first in all of the invocable service indications may be used as the second invocable service indication. For example, an exemplary instance of a message, indicating that the service triggering point invokes AS1, may be as follows:
P-Asserted-Service: s1, s3, s5

In the above instance, a first invocable service indication including three service identifiers "s1", "s3", "s5" is carried in one P-Asserted-Service header field. After that, an exemplary instance of a message indicating that the service triggering point invokes AS2 may be as follows:
P-Asserted-Service: s2, s4
P-Asserted-Service: s1, s3, s5

In the above instance, the service triggering point carries the second invocable service indication in another P-Asserted-Service header field, and puts it ahead of other P-Asserted-Service header fields. Thus, when receiving the message, AS2 uses the content in the first P-Asserted-Service header field as the newly added invocable service indication, that is, the second invocable service indication.

Furthermore, when the service triggering point invokes first service control point AS1 and carries an invocable service indication in the communication event message to be sent to AS1, it may further carry a service triggering point label corresponding to the invocable service indication. The label may be a service triggering point address, or an identifier generated by the service triggering point or being a pre-set data (for example, pre-set in a service filter criterion), the service triggering point or AS 1 may determine, based on the service triggering point label, that the invocable service indication is added by the service triggering point.

2. A same first service control point entity may have a plurality of different service triggering criteria.

First service control points on a same physical basis may be divided into a plurality of first service control points on different logical basis, the plurality of first service control points on different logical basis may be distinguished by different server address configurations in service triggering criteria. For example, route address of AS1 may be sip:as1.home1.net, AS1 may provide service 1, service 2, service 3 and service 4, which may be divided into two logical service control points, sip:part1@as1.home1.net and sip:part2@as1.home1.net. Wherein sip:part1@as1.home1.net provides service 1, and service 3, sip:part2@as1.home1.net provides service 2 and service 4. Addresses sip:part1@as1.home1.net and sip:part2@as1.home1.net use a separate service triggering criterion respectively. In the above example, addresses sip:part1@as1.home1.net and sip:part2@as1.home1.net are just exemplary instances, the addresses may also be in the form of sip:part1.as1.home1.ne sip:part2.as1.home1.net.

For the service triggering criteria used by the service triggering points, the service triggering points may use the same server address configuration but with other invocable service indication manners, such as the service information transparent data mentioned above.

3. Associations between service triggering criteria and invocable service indications include at least the following relationships: one service triggering criterion corresponds to one invocable service indication, and one service triggering criterion corresponds to a plurality of invocable service indications.

For the condition that one service triggering criterion corresponds to one invocable service indication, configuration such as configuration of service triggering criteria data may be as follows:

Three pieces of service triggering criteria data exist, and their server address configuration may be as follows:

```
       <ApplicationServer>
            <ServerName>sip:s1@AS1.home1.net</ServerName>
       </ApplicationServer>
     ,
       <ApplicationServer>
            <ServerName>sip:s3@AS1.home1.net</ServerName>
       </ApplicationServer>
     ,
       <ApplicationServer>
            <ServerName>sip:s5@AS1.home1.net</ServerName>
       </ApplicationServer>
```

The three pieces of service triggering criteria data correspond to invocable service indications of services s1, s3, s5 respectively.

For the condition that one service triggering criterion corresponds to a plurality of invocable service indications, configuration such as configuration of service triggering criteria data may be as follows:

One piece of service triggering criteria data exists, and its server address configuration may be as follows:

```
       <ApplicationServer>
            <ServerName>sip:AS1.home1.net;service=s1,s3,s5</ServerName>
       </ApplicationServer>
```

The invocable service indications of services s1, s3, s5 are carried by "service" parameter in the server address configuration.

Or, the server address configuration may be:

```
       <ApplicationServer>
              <ServerName>sip:part1@AS1.home1.net</ServerName>
       </ApplicationServer>
```

That is, the server address configuration configures an entry, and instructs the first service control point to perform three services s1, s3 and s5 through the invocable service indication "part1".

4. Manners used by the service triggering point to construct the invocable service indications in the communication event message include at least: carrying an invocable service indication in one piece of service triggering criteria data into one communication event message, incorporating invocable service indications in a plurality of pieces of service triggering criteria data into one communication event message.

An exemplary instance of carrying an invocable service indication in one piece of service triggering criteria data into one communication event message may be as follows:

One piece of service triggering criteria data exists, and it has only one server address configuration as follows:

```
       <ApplicationServer>
              <ServerName>sip:AS1.home1.net;service=s1,s3,s5</ServerName>
       </ApplicationServer>
```

The service triggering point carries it into one Route header field.

One piece of service triggering criteria data exists, and it has a plurality of server address configurations as follows:

```
       <ApplicationServer>
              <ServerName>sip:s1@AS1.home1.net</ServerName>
              <ServerName>sip:s3@AS1.home1.net</ServerName>
              <ServerName>sip:s5@AS1.home1.net</ServerName>
       </ApplicationServer>
```

The service triggering point carries it into a plurality of entries in one Route header field or into a plurality of Route header fields.

One piece of service triggering criteria data exists, and it has a plurality of service identifier configurations as follows:

```
       <ApplicationServer>
              <ServerName>sip:AS1.home1.net</ServerName>
              <ServiceIdentity>
                     <ServiceName>s1</ServiceName>
                     <ServiceName>s3</ServiceName>
                     <ServiceName>s5</ServiceName>
              </ServiceIdentity>
       </ApplicationServer>
```

The service triggering point carries it into a plurality of entries in one P-Asserted-Service header field or into a plurality of P-Asserted-Service header fields.

Three pieces of service triggering criteria data exist, and their server address configurations are as follows:

```
       <ApplicationServer>
              <ServerName>sip:s1@AS1.home1.net</ServerName>
       </ApplicationServer>
        ,
       <ApplicationServer>
              <ServerName>sip:s3@AS1.home1.net</ServerName>
       </ApplicationServer>
        ,
       <ApplicationServer>
              <ServerName>sip:s5@AS1.home1.net</ServerName>
       </ApplicationServer>
```

The service triggering point incorporates it into a plurality of entries in one Route header field or into a plurality of Route header fields.

For example, the situation where one Route header field has a plurality of entries is described below:

```
       INVITE sip:bob@home.net SIP/2.0
       Route: <sip:s1@AS1.home1.net;lr>, <sip:s3@AS1.home1.net;lr>,
   <sip:s5@AS1.home1.net;lr>
```

Or, the situation where there exists a plurality of Route header fields is described below:

```
       INVITE sip:bob@home.net SIP/2.0
       Route: <sip:s1@AS1.home1.net;lr>
       Route: <sip:s3@AS1.home1.net;lr>
       Route: <sip:s5@AS1.home1.net;lr>
```

That is, invocable service indications of services s1, s3 and s5 are carried in one INVITE message.

5. Manners used by the service triggering point to construct the invocable service indications in the communication event message further include: deleting invocable service indications of particular services based on the description of point 4 mentioned above.

Such a manner may be configured to control prohibit invocation of conflict services when a conflict is detected in service interaction. That is, the service triggering point recognizes services that have been invoked through signaling messages or service triggering criteria data, and detects through querying service conflict detection data that a particular service to be invoked will conflict with the invoked services, the service triggering point prohibits invocation of the particular service to be invoked which is conflicting to the invoked services.

How to detect service conflicts and descriptions about service conflict detection data is not concerned by embodiments of the present invention, what is concerned is to delete the invocable service indication of the service to be invoked after a conflict is detected.

For example:

A user has invoked service s1, server address configurations in subsequent service triggering criteria data are sip:s2@AS1.home1.net, sip:s4@AS1.home1.net, sip:s5@AS1.home1.net.

The service triggering point has acquired a service conflict level C1 of service s1, the service triggering point acquires the server address configurations and their corresponding service conflict levels through the execution of the service triggering criteria data, such as the service conflict level C4 of sip:s4@AS1.home1.net.

The service triggering point knows the service corresponding to C1 and the service corresponding to C4 through the service conflict detection data.

The service triggering point deletes the invocable service indication of service s4, that is, the invocable service indications now in the message sent by the service triggering point are: s2@AS1.home1.net, sip:s5@AS1.home1.net.

The above exemplary example is also applicable to other manners of server address configuration, for example the server address configuration may be sip:AS1.home1.net; service=s2,s4,s5. The service triggering point deletes the invocable service indication of service s4, and the invocable service indications now in the message sent by the service triggering point is sip:AS1.home1.net; service=s2,s5.

6. The invocable service indications in the communication event message are explicit indications or implicit indications.

Invocable service indications are configured to indicate the first service point of invocable services after the first service point receives the communication event message, where the invocable service indications may be explicit indications or implicit indications.

Explicit invocable service indications are indications indicating the first service point of names of invocable services with explicit invocable service information.

An exemplary instance of an explicit invocable service indication may be:

```
       INVITE sip:bob@home.net SIP/2.0
       Route: <sip:AS1.home1.net;service=s1,s3,s5;lr>
       .....
```

In the above instance, a "service" parameter is used in the Route header field, indicating that AS1 may invoke services s1, s3, s5 after receiving the communication event message, furthermore, order of "s1", "s3", "s5" represented in the parameter reflects priority of service invocation.

Another exemplary instance of an explicit invocable service indication may be:

```
       INVITE sip:bob@home.net SIP/2.0
       Route: <sip:AS1.home1.net;lr>
        .....
       Content-Type: application/serviceinfo+xml
       <?xml version="1.0" encoding="UTF-8"?>
         <serviceinfo xmlns="um:ietfparams:xml:ns:serviceinfo">
           <service>
             <servicekey>s1</servicekey>
             <priority>0</priority>
           </service>
           <service>
             <servicekey>s3</servicekey>
             <priority>2</priority>
           </service>
           <service>
             <servicekey>s5</servicekey>
             <priority>6</priority>
           </service>
         </serviceinfo>
        .....
```

In the above instance, a "serviceinfo" message body is used in an INVITE message, indicating the invocable services s1, s3, s5 and a corresponding service priority.

Another exemplary instance of an explicit invocable service indication may be:

```
       INVITE sip:bob@home.net SIP/2.0
       Route: <sip:s1@AS1.home1.net;lr>
       Route: <sip:s3@AS1.home1.net;lr>
       Route: <sip:s5@AS1.home1.net;lr>
```

In the above instance, an INVITE message carries a plurality of Route header fields, s1@AS1.home1.net, s3@AS1.home1.net, and s5@AS1.home1.net. The service control point knows that the invocable services are services s1, s3 and s5 through invocable service information "s1", "s3", "s5".

Additionally, order of Route header fields reflects the priority of service invocation is s1, s3, s5.

Another exemplary instance of an explicit invocable service indication may be:

```
       INVITE sip:bob@home.net SIP/2.0
       Route:<sip:s1@AS1.home1.net;lr>,<sip:s3@AS1.home1.net;lr>,<sip:s5@AS1.home
   1.net;lr>
```

In the above instance, one Route header field in an INVITE message carries invocable service indications for three services s1, s3 and s5.

Implicit invocable service indications are indications which do not explicitly indicate the invocable services, but the first service point may acquire names of invocable services corresponding to invocable services through manners such as configuration data or pre-set program.

An exemplary instance of an implicit invocable service indication may be:

```
       INVITE sip:bob@home.net SIP/2.0
       Route: <sip:10001@AS1.home1.net;lr>
       Route: <sip:20403@AS1.home1.net;lr>
       Route: <sip:30015@AS1.home1.net;lr>
```

In the above instance, an INVITE message carries a plurality of Route header fields, sip: 10001s1@AS1.home1.net, sip:20403@AS1.home1.net, and sip:30015@AS1.home1.net, corresponding to invocable services s1, s3 and s5 respectively. The service control point may know the invocable services through manners such as configuration data or pre-set program, for example, mapping sip:10001s1@AS1.home1.net in the configuration data to service s1.

Another exemplary instance of an implicit invocable service indication may be:

```
       INVITE sip:bob@home.net SIP/2.0
       Route: <sip:part1.AS1.home1.net;lr>
       .....
```

The service control point maps, based on configuration data or pre-set program, the address sip:part1.AS1.home1.net or part1 to the invocable services, such as services s1, s3 and s5.

7. The invocable service indications further include service priority information of the invocable services.

For example:

```
       INVITE sip:bob@home.net SIP/2.0
       Route: <sip:AS1.home1.net;lr>
        .....
       Content-Type: application/serviceinfo+xml
       <?xml version="1.0" encoding="UTF-8"?>
         <serviceinfo xmlns="um:ietfparams:xml:ns:serviceinfo">
              <service>
                     <servicekey>s1</servicekey>
                     <priority>0</priority>
              </service>
         </serviceinfo>
        .....
```

The above message indicates priority of service s1 is 0.

Other examples for indication of service priorities are included in the above descriptions, such as indicating service priorities with order of the invocable service indications represented in Route header field.

8. The approaches in which the service triggering point sends a communication event message to the first service control point may include sending the communication event message with a new dialog, and sending the communication event message with an original dialog.

For sending the communication event message with a new dialog, the service triggering point establishes a new SIP dialog, and sends the communication event message with a Form and Call-ID header field of the new SIP message.

Sending the communication event message with an original dialog includes the following manners: sending with an added route, and sending with a notification in a dialog.

For sending the communication event message with an added route, the service triggering point adds a Route header field to the first service control point to the communication event message. Sending the communication event message with an original dialog is generally applicable only to the condition that the communication event message is sent through SIP initial request, at this time, construction SIP dialog has not been completed and a Route header field may be added.

For sending the communication event message with a notification in a dialog, for example, the communication event message sent from the service triggering point to the first service control point is sent through SIP INFO message, SIP PUBLISH message, etc, wherein the invocable service indications may be carried by the service information transparent data, etc.

9. Control of the execution of invocable services by the first service control point according to the invocable service indication includes the following: the first service control point determines that services corresponding to the invocable service indications in the communication event message are services provided by itself, the first service control point processes the services until process of the services is accomplished, and the first service control point carries the invocable service indications of the invoked services in the message to be returned to the service triggering point.

An exemplary instance of the message received by first service control point AS1 may be:

```
       INVITE sip:bob@home.net SIP/2.0
       Route: <sip:s1@AS1.home1.net;lr>
       Route: <sip:s3@AS1.home1.net;lr>
       Route: <sip:s5@AS1.home1.net;lr>
```

At this time, AS1 detects that the Route header field corresponds to locally provided services s1, s3, s5, and AS1 processes invocation of the services according to the service priority. After accomplishing process of the services, AS1 sends an INVITE message to the service triggering point which performs subsequent service trigger or session control. If AS1 has successfully invoked only services s1 and s5, the INVITE message sent by AS1 to the service triggering point only carries invocable service indications of services s1 and s5. The service triggering point resolves the invocable service indications in the INVITE message and acquires the invoked services. For example, by resolving invocable service indications of s1 and s5, the service triggering point knows s1 and s5 have been invoked by the first service control point. Or, the service triggering point compares the invocable service indication it had sent and the received invocable service indication, and acquires the invoked services. For example, the invocable service indications sent by the service triggering point to the first service control point is s1, s3, s5, and the invocable service indications received from the first service control point is s1 and s5, the service triggering point knows that s1 and s5 have been invoked by the first service control point by comparison.

10. The service triggering point detecting the service triggering conditions includes at least one of the following: a service triggering condition to be detected being configured in the service triggering criteria, and the first service control point requesting the service triggering point to detect a service triggering condition during a communication process.

The service triggering conditions include at least one of the following: a received communication message, a status of session, time information, user presence information, and a status of user.

The service triggering point detects the service triggering conditions, if a service triggering criterion is matched, the service triggering point sends the communication event message to the first service control point described in the service triggering criteria.

For example, if the first service control point is an IM-SSF, the service triggering point statically configures Intelligent Service Trigger Detection Point (TDP) in the service triggering criteria acquired on the service triggering point.

The first service control point requests the service triggering point to detect service triggering conditions during a communication process, including the first service control point delivering service triggering conditions to the service triggering point or subscribing communication event messages need to be received during the communication process.

For example, if the first service control point is an IM-SSF, the IM-SFF deliveries an Intelligent Service Event Detection Point (EDP) detection request to the service triggering point, such as delivering Service in PSTN requesting Internet Services (SPRITS) protocol using a draft for comment (RFC) 3910 made by Internet Engineering Task Force (IETF) and requesting the service triggering point to detect EDP events.

The EDP detection request delivered by the first service control point may also carry transparent service data. When reporting a corresponding communication event message, the service triggering point copies the transparent service data into the communication event message. For example, if the first service control point is an IM-SSF, in order to map the communication event message reported by the service triggering point to the concrete intelligent services invoked by IM-SSF, the SPIRITS protocol may be extended so as to carry transparent service data in a delivered event monitoring request, such as an internal status machine number of IM-SSF, or a service key, an SCP address, an intelligent network protocol and a version of protocol, etc. When monitoring the corresponding communication event message, the service triggering point copies the above data to the communication event message to be reported. Through this manner, IM-SSF may conveniently recognize which intelligent service the communication event message reported by the service triggering point shall be sent to, and then IM-SSF quickly constructs an intelligent network protocol message based on these data and sends the message to a corresponding SCP. For example, the IM-SSF invokes intelligent service 1 and intelligent service 2, these two services corresponding to two control blocks 1001 and 1002 respectively within IM-SSF. Intelligent service 1 configures a Sender_Busy event, and both intelligent service 1 and intelligent service 2 configure a Sender_Acknowledge event. The SPIRITS protocol message, which is sent by the IM-SSF and requests the service triggering point to detect EDP events, carries transparent data 1001 corresponding to a control block number of intelligent service 1 for the Sender_Busy event, and carries transparent data 1001 corresponding to a control block number of intelligent service 1 and transparent data 1002 corresponding to a control block number of intelligent service 2 for the Sender_Acknowledge event. After reporting the Sender_Busy event, a subsequent service triggering point carries transparent data 1001 corresponding to a control block number of intelligent service 1. The IM-SSF can quickly locate an internal control block 1001 based on the transparent data, and reports the Sender_Busy event to intelligent service 1. Similarly, after reporting the Sender_Acknowledge event, the service triggering point carries transparent data 1001 corresponding to a control block number of intelligent service 1 and transparent data 1002 corresponding to a control block number of intelligent service 2. The IM-SSF can quickly locate internal control blocks 1001 and 1002 based on the transparent data, and report the Sender_Acknowledge event to intelligent service 1 and intelligent service 2.

11. The first service control point does not perform triggering detection, but converts the communication event message reported by the service triggering point into a format that can be recognized by the second service control point, and triggers it to the second service control point.

For example, the first service control point is an IM-SSF, using SPRITS protocol, and requesting the service triggering point to detect EDP events. The service triggering point performs event monitoring according to the SPRITS protocol, and reports an SPRITS protocol event when the event requested by the IM-SFF occurs. The IM-SFF does not perform triggering detection after receiving the event, but performs protocol convert for the reported SPRITS protocol DP event message, converting it into an intelligent DP event message that can be recognized by SCP and reports it to SCP.

12. The first service control point acquires the invocable service indication external to a call. If the service corresponding to the invocable service indication can only be used after being activated, then, after the service is activated, the first service control point notifies the service triggering point directly or indirectly through a Home Subscriber Server that the service triggering criterion applicable to the invocable service indication is available.

The first service control point may acquire the invocable service indication, such as s1, s3 and s5 through a process that is not related to a call, such as initiating a third party registration through the service triggering point, or initiating a request to the Home Subscriber Server, wherein the Home Subscriber Server is a server storing service triggering criteria of the users.

If services s1 and s5 can only be used after being activated, for example, a user subscribes services s1 and s5, but the services can only be used after the user configures service application data for services s1 and s5, the first service control point determines that both services s1 and s5 are activated, then notifies the Home Subscriber Server that the service triggering criterion applicable to services s 1 and s5 is available. The notification shall carry at least user identifiers and service triggering criteria identifiers, or, the notification shall carry at least user identifiers, server address configuration of the first service control point and invocable service indications of invoked services. The Home Subscriber Server notifies the service triggering point that the service triggering criterion applicable to s1 and s5 is available, such as delivering the service triggering criterion to the service triggering point or modifying the service triggering criterion on the service triggering point as available.

Or, the first service control point determines both services s1 and s5 are activated, and then directly notifies the service triggering point that the service triggering criterion applicable to services s1 and s5 is available.

After that, the service triggering point receives a communication event message, performs the available service triggering criterion and acquires the first service control point. The service triggering point then sends a communication event message carrying the invocable service indication to the first service control point.

Further descriptions are given below for embodiments of the present invention.

A First Embodiment:

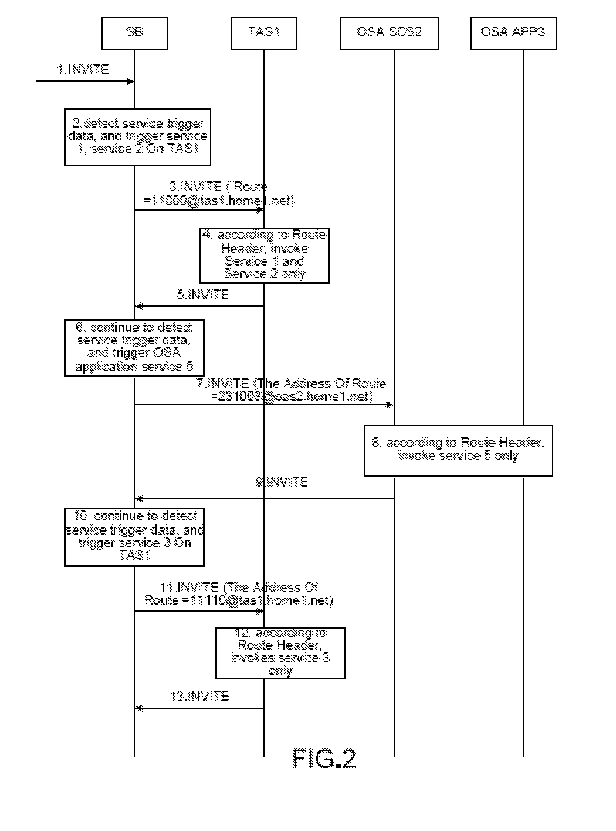

Referring to Fig 2, in this embodiment, the service triggering point is Service Broker, the first service control point is TAS1 and OSA SCS2, and the second service control point is OSA APP3. TAS1 provides service 1, service 2 and service 3, and OSA SCS2 and OSA APP3 provide service 5. A requested service invocation order is: service 1, service 2, service 5, and service 3.

Step 1: Service Broker receives a SIP INVITE message.

Step 2: Service Broker detects service triggering criteria of a user, at this time, a triggering criterion 1 having the highest triggering criterion priority 0 exists, and exemplary description of the triggering criterion is as follows:

```
       <FilterCriteria>
              <Priority>0</Priority>
       .....
              <ApplicationServer>
                     <ServerName>sip:11000@tas1.home1.net</ServerName>
                     <DefaultHandling>0</DefaultHandling>
              </ApplicationServer>
       </FilterCriteria>
```

wherein the server address configuration description sip:11000@tas1.home1.net corresponds to server TAS1.

Step 3: Service Broker adds the server address configuration to the Route header field of the SIP INVITE message according to triggering criterion 1 and triggers the message to TAS1.

Step 4: TAS1 queries locally configured invocable service mapping data according to the address sip:11000@tas1.home1.net in Route header field of the received INVITE message, e.g., queries a server address configuration - service mapping table, and acquires that the invocable services are service 1, and service2. TAS1 invokes service 1 and service 2.

Step 5: After invoking service 1 and service 2, TAS1 routes an INVITE message to Service Broker.

Step 6: Service Broker detects service triggering criteria of the user, at this time, a triggering criterion 2 having the second highest triggering criterion priority 1 exists, and a server address configuration configured in triggering criterion 2 is logical address of OSA SCS2, sip:231003@osa2.home1.net.

Step 7: Service Broker triggers to OSA SCS2 according to triggering criterion 2 and adds the server address configuration to Route header field of a SIP INVITE message.

Step 8: OSA SCS2 queries a server address configuration - service mapping table according to the address sip:231003@osa2.home1.net in Route header field of the received INVITE message, and acquires that the invocable service is service 5. OSA SCS2 invokes service 5 on OSA APP3.

Step 9: After invoking service 5, OSA SCS2 routes an INVITE message to Service Broker.

Step 10: Service Broker detects service triggering criteria of a user, at this time, a triggering criterion 3 having a triggering criterion priority 2 exists, and a server address configuration configured in triggering criterion 3 is logical address of TAS1, sip:11110@tas1.home1.net.

Step 11: Service Broker triggers to TAS1 according to triggering criterion 3 and adds the server address configuration to Route header field of a SIP INVITE message.

Step 12: TAS1 queries a server address configuration - service mapping table according to the address sip:11110@tas1.home1.net in Route header field of the received INVITE message, and acquires that the invocable service is service 3. TAS1 invokes service 3.

Step 13: After invoking service 3, TAS1 routes an INVITE message to Service Broker.

In this embodiment, the service triggering point implicitly indicates the first service control point of the invocable services, and other manners may also be used to indicate invocable services. Foe example, the server address configuration configured in triggering criterion 1 is sip:tas1.home1.net;service=s1,s2, wherein service=s1,s2 represents that TAS1 may invoke service 1 and service 2 after the service triggering criterion is triggered, order of s1, s2 represents service priority is: s1, s2. Or, the server address configurations may be sip:s1@tas1.home1.net, sip:s2@tas1.home1.net, the order of the server address configurations represents service priority is: s1, s2. Or, the invocable services may be indicated through service information transparent data in the triggering criteria, for example, service information transparent data configured in triggering criterion 1 may be:

```
       Content-Type: application/serviceinfo+xml
       <?xml version="1.0" encoding="UTF-8"?>
          <serviceinfo xmlns="um:ietf:params:xml:ns:serviceinfo">
              <service>
                     <servicekey>s1</servicekey>
                     <priority>0</priority>
              </service>
              <service>
                     <servicekey>s2</servicekey>
                     <priority> 1 </priority>
              </service>
         </serviceinfo>
```

The service information transparent data represents that after the triggering criterion is triggered, TAS1 may invoke service 1, service 2, and priority of service 1 is 0 and priority of service 2 is 1.

In this embodiment, subsequent service invocation messages of TAS1 are sent through route adding, or through other manners mentioned above, such as using updated route header fields or using notification in a dialog.

The service triggering point in the present invention may also be an S-CSCF.

A Second Embodiment:

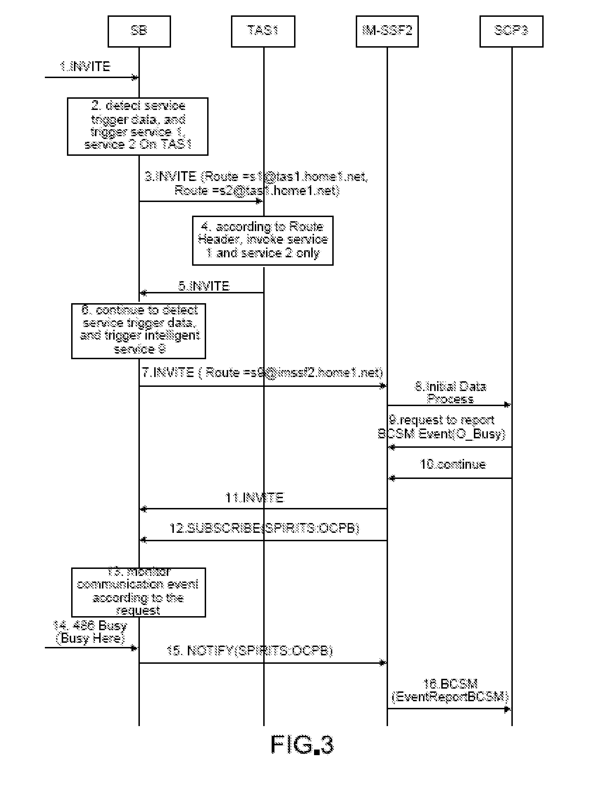

Referring to Fig 3, in this embodiment, the service triggering point is Service Broker, the first service control point is TAS1 and IM-SSF2, and the second service control point is SCP3. TAS1 provides service 1 and service 2, and IM-SSF2 and SCP3 provide service 9. A requested service invocation order is: service 1, service 2, and service 9.

Step 1: Service Broker receives a SIP INVITE message.

Step 2: Service Broker detects service triggering criteria of a user, at this time, a triggering criterion 1 having the highest triggering criterion priority 0 exists, and a server address configuration includes two address entries corresponding to server TAS1: sip:s1@tas1.home1.net, sip:s2@tas1.home1.net.

Step 3: Service Broker adds the server address configuration to Route header field of a SIP INVITE message according to triggering criterion 1, and triggers the message to TAS1.

Step 4: TAS1 queries a server address configuration - service mapping table according to the address sip:s1@tas1.home1.net, sip:s2@tas1.home1.net in Route header field of the received INVITE message, and acquires that the invocable services are service 1, and service2. TAS1 invokes service 1 and service 2.

Step 5: After invoking service 1 and service 2, TAS1 routes an INVITE message to Service Broker.

Step 6: Service Broker detects service triggering criteria of the user, at this time, a triggering criterion 2 having the second highest triggering criterion priority 1 exists, and a server address configuration configured in triggering criterion 2 is logical address of IM-SSF2, sip:s9@imssf2.home1.net.

Step 7: Service Broker triggers to IM-SSF2 according to the triggering criterion 2 and adds the server address configuration to Route header field of a SIP INVITE message.

Step 8: IM-SSF2 queries a server address configuration - service mapping table according to the address sip:s9@imssf2.home1.net in Route header field of the received INVITE message, acquires the invocable service is service 9 on SCP3. The IM-SSF sends Initial Detection Point (InitialDP) of CAP message to SCP3, wherein service key of the message is filled with service 9, SCP3 invokes service 9 according to the service key.

Step 9: SCP3 delivers a CAP Request Report SCSM Event instruction in a process of service 9, requesting IM-SSF2 to monitor a Sender_Busy DP event.

Step 10: SCP3 delivers a CAP Continue instruction, instructing IM-SSF2 to continue the process.

Step 11: IM-SSF2 routes the INVITE message to Service Broker.

Step 12: IM-SSF2 uses an extended SPIRITS protocol to request Service Broker to monitor whether a calling user receives a Busy event, that is, IM-SSF2 sends a SUBSCRIBE message to Service Broker.

For example:

```
        SUBSCRIBE sip:ISB1.home1.net SIP/2.0
       To: <sip:6302240216@home1.net>
          .....
       Event: spirits-INDPs-expand
       Allow-Events: spirits-INDPs-expand
       Accept: application/spirits-event-expand+xml
       Content-Type: application/spirits-event-expand+xml
          .....
       <?xml version="1.0" encoding="UTF-8"?>
       <spirits-event-expand xmlns="um:ietfparams:xml:ns:spirits-expand">
              <Event type="INDPs" name="OCPB" mode="R">
                     <CallingPartyNumber>6302240216</CallingPartyNumber>
              </Event>
              <transparentInfo>
                     <SSMID>861223311</SSMID>
              </transparentInfo>
       </spirits-event>
```

In the above message, IM-SSF2 requests the Service Broker with the address sip:ISB1.home1.net to monitor a Busy event of the user with the address sip:6302240216@home1.net (corresponding to a description name = "OCPB"), the monitoring mode is request mode (corresponding to a description mode = "R").

The above message extends SPIRITS protocol, the message body also carries transparent data (corresponding to a description in "Transparent Info"), wherein SSMID is an internal status machine number of IM-SSF2.

After receiving the above message, Service Broker stores the event to be monitored, Service Broker also stores the transparent data.

Step 13: Service Broker maps the SPIRITS event to be monitored to a corresponding SIP message and performs monitoring.

Step 14: After several call processes, Service Broker receives a SIP response code, 486 Busy Here.

Step 15: Service Broker detects that this event is the event to be monitored as requested by IM-SSF2, Service Broker notifies IM-SSF through a NOTIFY message, for example:

```
       NOTIFY sip:imssf2.home1.net SIP/2.0
          ......
        Subscription-State: terminated;reason=fired
       Accept: application/spirits-event-expand+xml
       Event: spirits-INDPs-expand
       Allow-Events: spirits-INDPs-expand
       Content-Type: application/spirits-event-expand+xml
          .....
       <?xml version="1.0" encoding="UTF-8"?>
       <spirits-event xmlns="urn:ietfparams:xml:ns:spirits-expand">
              <Event type="INDPs" name="OCPB" mode="R">
                     <CallingPartyNumber>6302240216</CallingPartyNumber>
                     <CalledPartyNumber>3125551212</CalledPartyNumber>
              </Event>
              <transparentInfo>
                     <SSMID>861223311</SSMID>
              </transparentInfo>
       </spirits-event>
```

In the above message, the event reported by Service Broker is a "calling party receives a busy" event (corresponding to a description name = "OCPB"), the monitoring mode is request mode (corresponding to a description mode = "R"). Service Broker also copies the transparent data in the stored SUBSCRIBE request to the NOTIFY message.

Step 16: IM-SSF2 locates a corresponding intelligent protocol control block based on SSMID in NOTIFY message, and acquires an address, type of protocol for communication with SCP3. IM-SSF2 transfers its status to Sender_Busy according to the event in NOTIFY message, converts the event reported by Service Broker to be an Event Report BSCM in CAP message and reports to SCP3.

Embodiments of the present invention also provide a service triggering apparatus, including: a service triggering detecting unit, a service invocation message constructing unit and a service invocation message delivering unit. The service triggering detecting unit is configured to detect a service triggering condition, the service invocation message constructing unit is configured to construct a communication event message for service invocation when the service triggering condition is satisfied, the communication event message carrying the invocable service indication, and the service invocation message delivering unit is configured to send the communication event message for service invocation to a first service control point through an E1 interface.

Preferably, the service triggering apparatus further includes: a service invocation message receiving unit and an invoked service acquiring unit. The service invocation message receiving unit is configured to receive a message returned by the first service control point, and the invoked service acquiring unit is configured to resolve or compare the invocable service indications carried in the returned message and acquire the invoked services.

Preferably, the service triggering apparatus further includes: a service indication deleting unit, a service indication adding unit and a label carrying unit. The service indication deleting unit is configured to delete the invocable service indications previously added into a communication event message when constructing the communication event message, the service indication adding unit is configured to add the invocable service indications into the communication event message in order, and the label carrying unit is configured to carry service triggering point labels corresponding to the invocable service indications when constructing the communication event message.

Preferably, the service invocation message constructing unit is further configured to determine whether a service conflict exists when constructing the communication event message, and carry no invocable service indications for conflicting services.

Functions and actions of the units within the apparatus may refer to the corresponding functions and implementations mentioned above for the system or method, and will not be described again here.

Embodiments of the present invention also provide a service control apparatus, including: a service invocation message receiving unit, a service invocation matching unit and a service processing control unit. The service invocation message receiving unit is configured to receive a communication event message for service invocation sent by a service triggering point. The service invocation matching unit is configured to acquire an invocable service indication from the communication event message received by the service invocation message receiving unit. The service processing control unit is configured to control the execution of the invocable services according to the indication acquired by the service invocation matching unit.

Preferably, the apparatus further includes an invocable service indication feedback unit, configured to return a message to the service triggering point after the service processing control unit controls the execution of the invocable services, wherein the message carries invocable service indications of the invoked services.

Preferably, the apparatus further comprises a determination unit, configured to determine, after the service invocation matching unit acquires the invocable service indication, whether the service corresponding to the invocable service indication can only be used after being activated, wherein if the invocable service indication can only be used after being activated, the determination unit notifies, after all the service are activated, the service triggering point directly or indirectly through a Home Subscriber Server that the service triggering criterion applicable to the invocable service indication is available.

Functions and actions of the units within the apparatus may refer to the corresponding functions and implementations mentioned above for the system or method, and will not be described again here.

Embodiments of the present invention ensure requirements on service priority under a circumstance of a multi-service server, and perform a unified triggering control process under a circumstance that the service triggering point connects to a service control point that needs a second trigger, so that triggering process efficiency is increased. Embodiments of the present invention may also reduce signaling delay so as to attenuate network load, embodiments of the present invention may prohibit conflict service invocation when a service conflict occurs.

It should be noted that, one of the ordinary skilled in the art shall understand that all or part of the steps in the method of the above embodiments may be implemented by hardware under instructions of programs, the programs may be stored in computer readable mediums. When executing the programs, steps mentioned in the above method are implemented, contents of the steps may refer to the above description and will not be introduced here again. The computer readable mediums may be: ROM/RAM, magnetic disks or optical disks.
The foregoing are merely various embodiments of the present invention, which are not intended to limit the present invention. Various modifications and variations can be made to the present invention by those skilled in the art. Any modifications, equivalents, improvements made within the spirit and principle of the present invention shall be construed as fall within the scope of the present invention.

## Claims

1. A method for controlling service invocations, applicable in a multi-service server environment, **characterized in** comprising:
detecting, by a service triggering point, a service triggering condition; and
sending a communication event message which carries an invocable service indication to a first service control point when the service triggering condition is satisfied.

2. The method of claim 1, **characterized in that,** the invocable service indication is acquired according to a service triggering criterion.

3. The method of claim 1, **characterized in that,** a same first service control point has a plurality of different service trigger criteria.

4. The method of claim 2, **characterized in that,** associations between service trigger criteria and invocable service indications comprise at least one of the followings: one service trigger criteria corresponding to one invocable service indication, one service trigger criteria corresponding to a plurality of invocable service indications.

5. The method of claim 2, **characterized in that,** manners used by the service triggering point to construct the invocable service indications in the communication event message comprises at least one of the followings: carrying an invocable service indication in one piece of service triggering criteria data into one communication event message, combining invocable service indications in a plurality of pieces of service triggering criteria data into one communication event message.

6. The method of claim 1, **characterized in that,** manners used by the service triggering point to construct the invocable service indications in the communication event message further comprise: deleting invocable service indications of conflict services in the communication event message.

7. The method of claim 6, **characterized in that,** deleting invocable service indications of particular services comprises deleting invocable service indications of conflict services when the service trigger point detects a service conflict.

8. The method of claim 1, **characterized in that,** the invocable service indications are carried in the communication event message through at least one of the followings: an address entry of the first service control point in a header of an SIP message, and service information transparent data carried in a body of the SIP message.

9. The method of claim 1, **characterized in that,** after sending the communication event message to the first service control point, the service triggering point receives a message returned from the first service control point, resolves or compares the invocable service indications in the message and acquires the invoked services.

10. The method of claim 1, **characterized in that,** when the service triggering condition is satisfied, the service triggering point constructs the communication event message carrying the invocable service indication, deletes invocable service indications previously added into a communication event message, and/or, adds the invocable service indications into the communication event message in order.

11. The method of claim 1, **characterized in** further comprising:
carrying, by the service triggering point, service triggering point labels corresponding to the invocable service indications in the communication event message when the service triggering condition is satisfied.

12. The method of claim 1, **characterized in** further comprising:
acquiring, by the first service control point, the invocable service indication from the communication event message; and
controlling, by the first service control point, the execution of the invocable services according to the indication.

13. A method for controlling service invocations, applicable in a multi-service server environment, **characterized in** comprising:
receiving a communication event message sent by a service triggering point;
acquiring an invocable service indication from the communication event message; and
controlling the execution of the invocable services according to the indication.

14. The method of claim 13, **characterized in** further comprising:
returning a message to the service triggering point after controlling the execution of the invocable services, wherein the message carries invocable service indications of the invoked services.

15. The method of claim 13, **characterized in that,** after the invocable service indication is acquired and if it is determined that the invocable service indication can only be used after being activated, the method further comprises:
notifying, after all the service are activated, the service triggering point directly or through a Home Subscriber Server that the service triggering criterion applicable to the invocable service indication is available.

16. The method of claim 13, **characterized in that,** the invocable service indication further comprises service priority information of the invocable services, and the method further comprises:
executing the services according to the service priority information.

17. A service triggering apparatus, comprising:
a service triggering detecting unit, configured to detect a service triggering condition;
a service invocation message constructing unit, configured to construct a communication event message for service invocation when the service triggering condition is satisfied; and
a service invocation message delivering unit, configured to send the communication event message for service invocation to a first service control point through an E1 interface.

18. The service triggering apparatus of claim 17, **characterized in** further comprising at least one of the following:
a service indication deleting unit, configured to delete the invocable service indications previously added into a communication event message when the service invocation message constructing unit is constructing the communication event message;
a service indication adding unit, configured to add the invocable service indications into the communication event message in order when the service invocation message constructing unit is constructing the communication event message; and
a label carrying unit, configured to carry service triggering point labels corresponding to the invocable service indications when the service invocation message constructing unit is constructing the communication event message.

19. The service triggering apparatus of claim 17, **characterized in** further comprising:
a service invocation message receiving unit, configured to receive a message returned by the first service control point;
an invoked service acquiring unit, configured to resolve or compare the invocable service indications carried in the returned message and acquire the invoked services.

20. A service control apparatus, comprising:
a service invocation message receiving unit, configured to receive a communication event message for service invocation sent by a service triggering point;
a service invocation matching unit, configured to acquire an invocable service indication from the communication event message received by the service invocation message receiving unit; and
a service processing control unit, configured to control the execution of the invocable services according to the indication acquired by the service invocation matching unit.

21. The service control apparatus of claim 20, **characterized in** further comprising at least one of the followings:
an invocable service indication feedback unit, configured to return a message to the service triggering point after the service processing control unit controls the execution of the invocable services, wherein the message carries invocable service indications of the invoked services.

22. The service control apparatus of claim 20, **characterized in** further comprising:
a determining unit, configured to determine, after the service invocation matching unit acquires the invocable service indication, whether the service corresponding to the invocable service indication can only be used after being activated;
wherein if the invocable service indication can only be used after being activated, the determining unit notifies, after all the services are activated, the service triggering point directly or through a Home Subscriber Server that the service triggering criterion applicable to the invocable service indication is available.

23. A system for controlling service invocations, applicable in a multi-service server environment, **characterized in** comprising:
a service triggering point, configured to detect a service triggering condition and send a constructed communication event message to a first service control point when the service triggering condition is satisfied; and
at least one first service controlling point, configured to acquire an invocable service indication from the communication event message sent by the service triggering point, and control execution of the invocable services according to the indication.

24. The system of claim 23, **characterized in that,** the service triggering point comprises:
a service trigger detecting unit, configured to detect a service trigger condition;
a service invocation message constructing unit, configured to construct a communication event message for service invocation when the service trigger condition is satisfied; and
a service invocation message delivering unit, configured to send the communication event message for service invocation to a first service control point through an E1 interface.

25. The system of claim 23 or 24, **characterized in that,** the first service controlling point comprises:
a service invocation message receiving unit, configured to receive a communication event message for service invocation sent by a service triggering point;
a service invocation matching unit, configured to acquire an invocable service indication from the communication event message received by the service invocation message receiving unit; and
a service processing controlling unit, configured to control execution of the invocable services according to the indication acquired by the service invocation matching unit.
